# EUROPÄISCHE PATENTSCHRIFT

(11) **EP 2 956 389 B1**
(45) Veröffentlichungstag und Bekanntmachung des Hinweises auf die Patenterteilung: **06.06.2018**
(21) Anmeldenummer: 15711654.2
(22) Anmeldetag: 06.03.2015
(51) Int. Cl.: B65G 13/075, B65G 13/07

(54) **BREMSVORRICHTUNG FÜR EINEN ROLLENFÖRDERER, ROLLENFÖRDERER UND VERFAHREN ZUM HERSTELLEN EINER BREMSVORRICHTUNG FÜR EINEN ROLLENFÖRDERER**
BRAKING DEVICE FOR A ROLLER CONVEYOR, ROLLER CONVEYOR, AND METHOD FOR PRODUCING A BRAKING DEVICE FOR A ROLLER CONVEYOR
DISPOSITIF DE FREINAGE POUR UN TRANSPORTEUR À ROULEAUX, TRANSPORTEUR À ROULEAUX ET PROCÉDÉ SERVANT À FABRIQUER UN DISPOSITIF DE FREINAGE POUR UN TRANSPORTEUR À ROULEAUX

(30) Priorität: 11.03.2014 DE 102014003430
(43) Veröffentlichungstag der Anmeldung: 23.12.2015
(73) Patentinhaber: Interroll Holding AG, 6592 Sant' Antonino (CH)
(72) Erfinder: REICHEL, Ulrich, 69469 Weinheim (DE)
(74) Vertreter: Müller-Boré & Partner Patentanwälte PartG mbB
(86) Internationale Anmeldenummer: PCT/EP2015/000505
(87) Internationale Veröffentlichungsnummer: WO 2015/135637

(56) Entgegenhaltungen:
- EP-A1- 2 581 331
- WO-A1-03/044386
- DE-A1- 2 550 143
- DE-A1- 19 851 668
- DE-B- 1 295 472
- DE-C2- 19 628 711
- FR-A1- 2 467 152
- JP-A- H 072 327
- JP-A- H08 113 335
- JP-A- H08 217 214
- JP-A- 2003 160 215

## Beschreibung

Die vorliegende Erfindung betrifft eine Bremsvorrichtung für einen Rollenförderer sowie einen mit dieser Bremsvorrichtung ausgestatteten Rollenförderer und ein Verfahren zum Herstellen einer Bremsvorrichtung.

Um auf einem Rollenförderer transportierte Gegenstände, wie Pakete und dergleichen, an vorgegebenen Positionen einer Förderstrecke anzuhalten, ist ein Rollenförderer mit Bremsvorrichtungen ausgestattet, um vorgegebene Förderrollen zu einem vorgegebenen Zeitpunkt abzubremsen bzw. zum Stillstand zu bringen. Hierzu schlägt die Druckschrift CH 414 455 eine in eine Förderrolle des Rollenförderers integrierte Bremsvorrichtung vor. Ein Austausch bzw. eine Reparatur der Bremsvorrichtung ist bei diesem System komplex, weil die Bremsvorrichtung aus der Förderrolle demontiert werden muß.

DE 1 295 472 B offenbart eine Bremsvorrichtung für Schwerkraftrollenbahnen mit einer die Bremse periodisch wirksammachenden Steuereinrichtung, die eine mit einem drehzahlveränderlichen Antrieb gekuppelte Exzenterscheibe aufweist.

DE 196 28 711 C2 offenbart eine Staurollenbahn mit einem Tragelement, in dem eine Öffnung zur Aufnahme einer Exzenterscheibe sowie Aussparungen für die formschlüssige Aufnahme von Bremselementen angeordnet sind.

DE 196 28 711 C2 offenbart den Oberbegriff des Anspruchs 1.

Es besteht somit ein Bedarf für eine Bremsvorrichtung, die einfach auszutausch ist, um Stillstandszeiten eines Rollenförderers zu vermindern.

Diese Aufgabe wird durch die Merkmale der unabhängigen Ansprüche gelöst. Vorteilhafte Weiterbildungen der Erfindung sind in den abhängigen Ansprüchen definiert.

Gemäß einem ersten Aspekt der Erfindung wird eine Bremsvorrichtung für einen Rollenförderer zur Verfügung gestellt, die folgendes aufweist:
zumindest einen Bremsbelag zum in Eingriff treten mit einem Aussenumfang zumindest einer Förderrolle des Rollenförderers;
eine Exzenterwelle mit einem ersten Exzenter zum Bewegen des Bremsbelags zu der Förderrolle hin und von dieser weg; und
einen Schritt- oder Servo- oder Steppermotor zum Drehen der Exzenterwelle.

Indem der Bremsbelag mit einem Außenumfang der Förderrolle des Rollenförderers in Eingriff tritt, kann die gesamte Bremsvorrichtung außerhalb, d.h. extern von den Förderrollen in einem Rollenförderer montiert werden. Auf diese Weise kann die Bremsvorrichtung bei Betriebsstörungen leicht gegen eine andere Bremsvorrichtung ausgetauscht werden. Indem des weiteren die Exzenterwelle den Bremsbelag sowohl zu der Förderrolle hin als auch von dieser weg bewegt, kann über den Motor eine sehr exakte Abbremsung zu einem vorgegebenen Zeitpunkt erzielt werden. Darüber hinaus kann ein unerwünschter Bremseingriff nach dem Lösen der Bremse durch das Wegbewegen des Bremsbelags von der Förderrolle verhindert werden.

Vorzugsweise handelt es sich bei dem Motor um einen 24V Gleichstrommotor.

Erfindungsgemäß ist der Bremsbelag aus einem Stück mit daran angeordneten Bremsflächen hergestellt bzw. gegossen und weist eine Bohrung für die drehbare Aufnahme des ersten Exzenters auf. Hierdurch wird eine gleichmäßige Bewegung des Bremsbelags entsprechend der Kontur des Exzenters gewährleistet.

Indem vorzugsweise ein Antriebszahnrad der Exzenterwelle mit einem Abtriebszahnrad des Schrittmotors in Eingriff gebracht wird, kann eine Antriebswelle des Schrittmotors weiter entfernt von der abzubremsenden Förderrolle angeordnet werden, um eine kompakte Bauweise der gesamten Bremsvorrichtung zu erzielen.

Weiter bevorzugt weist die Exzenterwelle mindestens einen zweiten Exzenter auf, der gegenüber dem ersten Exzenter versetzt angeordnet ist und als Lagersitz für eine Lagerung einer drehbaren Rolle dient.

Indem die Exzenterwelle des weiteren den zweiten Exzenter aufweist, kann nach dem Zurückziehen des Bremsbelags ein Antriebsriemen für die Förderrolle des Rollenförderers durch die drehbare Rolle gegen die vorher abgebremste Förderrolle des Rollenförderers gedrückt werden, um einen ordnungsgemäßen Reibeingriff eines Antriebsriemens an der anzutreibenden Förderrolle zu gewährleisten. In anderen Worten wird vorzugsweise entweder der Bremsbelag gegen die abzubremsende Förderrolle gedrückt, indem der erste Exzenter zu der Förderrolle hin bewegt wird, während nach dem Abbremsen und gewünschten Antreiben der Förderrolle der erste Bremsbelag durch den ersten Exzenter von der Förderrolle weg bewegt wird, während gleichzeitig der zweite Exzenter zu der Förderrolle hin bewegt wird. Hierdurch wird der Bremsbelag von der Förderrolle weggezogen, während gleichzeitig die drehbare Rolle zu der anzutreibenden Förderrolle hin bewegt wird, um einen Antriebsriemen gegen die Förderrolle zu drücken.

Vorzugsweise ist die drehbare Rolle aus einem Kunststoff gegossen. Weiter bevorzugt weist die drehbare Rolle ein Paar Wälzlager auf. Beispiele hierfür sind Kugellager, Nadellager oder dergleichen. Es können jedoch auch Gleitlager eingesetzt werden.

Indem der Bremsbelag vorzugsweise ein Paar Reibflächen aufweist, die über ein Joch bzw. einen Steg miteinander verbunden sind, können beispielsweise zwei benachbarte Förderrolle gleichzeitig durch die Bremsvorrichtung abgebremst werden.

Indem des weiteren die Exzenterwelle gemäß einer bevorzugten Ausführungsform einen Grundkörper mit einem Polygonquerschnitt aufweist, können die Exzenterwelle und die Bremsvorrichtung modular aufgebaut werden, indem das Antriebszahnrad, und der erste und zweite Exzenter formschlüssig mit dem Grundkörper verbunden werden. Somit können andere Konfigurationen der Bremsvorrichtung und der Exzenterwelle auf einfache Weise zur Verfügung gestellt werden. Vorzugsweise ist der Grundkörper beispielsweise aus einem Sechskantstangenmaterial hergestellt.

Weiter bevorzugt weist der Schrittmotor eine Steuerung auf, die die Stromzufuhr abschaltet oder begrenzt, wenn nach dem Überschreiten eines vorgegebenen oder vorgebbaren bzw. einstellbaren Stromwerts eine vorgegebene oder vorgebbare bzw. einstellbare Zeit verstrichen ist. Dabei ist die Steuerung in der Bremsvorrichtung bzw. dem Schrittmotor integriert bzw. angeordnet, so dass die Bremsvorrichtung von außen (extern) lediglich ein Signal zum Bremsen erhält. Das Abschalten oder Begrenzen der Stromzufuhr wird von der internen Steuerung ausgeführt.

Vorzugsweise sind die Exzenterwelle und der Schrittmotor gemeinsam an einem Rahmen der Bremsvorrichtung montiert. Somit bildet die Bremsvorrichtung eine kompakte Einheit, die an einem Rollenförderer montiert werden kann und bei Bedarf einfach ausgewechselt werden kann. Für Montage/Demontage der Bremsvorrichtung wird diese durch entsprechende Befestigungsmittel, wie beispielsweise Schrauben, Bolzen, Haken, Schnellverschlüsse und dergleichen an einem Rahmen des Rollenförderers eingehängt und/oder befestigt.

Gemäß einem weiteren Aspekt wird ein Rollenförderer mit einer Vielzahl von in einem Rahmen angeordneten drehbaren Förderrollen zur Verfügung gestellt, wobei die Förderrollen vorzugsweise von einem Flachriemen angetrieben werden, indem die Förderrollen in reibschlüssigem Eingriff mit dem Flachriemen stehen. Dabei ist zumindest eine Bremsvorrichtung, wie sie vorstehend beschrieben ist, zum Abbremsen zumindest einer Förderrolle an dem Rahmen des Rollenförderers montiert.

Gemäß einem weiteren Gesichtspunkt wird ein Verfahren zum Herstellen einer Bremsvorrichtung für einen Rollenförderer mit den folgenden Schritten zur Verfügung gestellt:
Bereitstellen einer Exzenterwelle mit einem Polygon-Querschnitt;
Anordnen zumindest eines ersten Exzenters auf der Exzenterwelle in formschlüssiger Weise, um ein relatives Verdrehen des ersten Exzenters gegenüber der Exzenterwelle zu verhindern;
Herstellen bzw. Gießen eines Bremsbelags aus einem Stück mit daran angeordneten Bremsflächen;
in Eingriff bringen zumindest eines Bremsbelags mit dem ersten Exzenter derart, dass der erste Exzenter in einer Bohrung des Bremsbelags drehbar aufgenommen wird; und
Bereitstellen eines Schrittmotors zum Antreiben der Exzenterwelle.

Die Erfindung wird nun anhand eines Ausführungsbeispiels unter Bezugnahme auf die beigefügten Zeichnungen näher erläutert.
Fig. 1 zeigt einen Schnitt durch die Bremsvorrichtung.
Fig. 2 zeigt eine perspektivische Ansicht der Bremsvorrichtung.
Fig. 3 zeigt eine perspektivische Detailansicht der Exzenterwelle mit einem daran montierten Antriebszahnrad.
Fig. 4 zeigt die Exzenterwelle von Fig. 3 nach der Montage eines ersten Exzenters sowie eines Paars zweiter Exzenter.
Fig. 5 zeigt die Exzenterwelle von Fig. 4 nach der Montage von Wälzlagern an den zweiten Exzentern.
Fig. 6 zeigt eine perspektivische Ansicht des Bremsbelags, der ein Paar Bremsflächen aufweist.
Fig. 7 zeigt eine perspektivische Ansicht der Rolle vor der Montage auf den Wälzlagern der Exzenterwelle.
Fig. 8 zeigt eine perspektivische Ansicht eines Rollenförderers, bei dem die Förderrollen durch einen Flachriemen angetrieben werden.

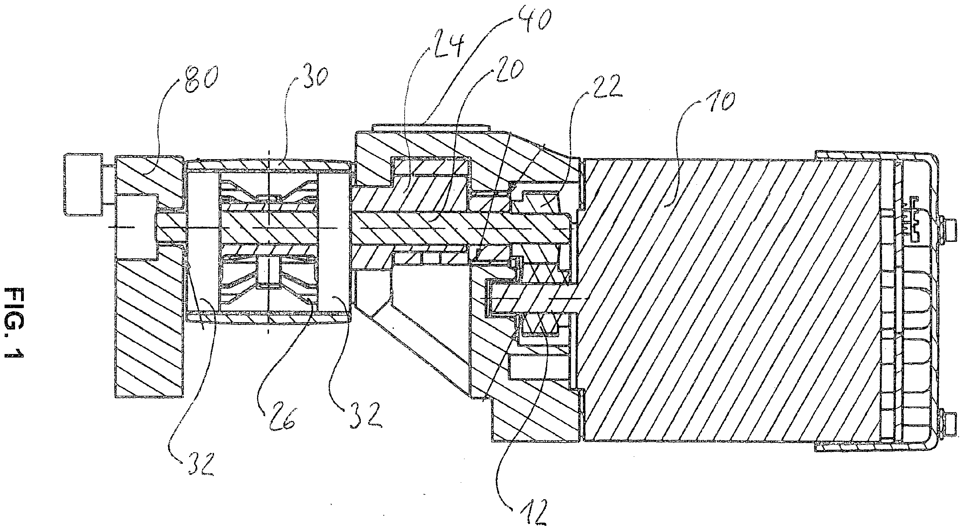

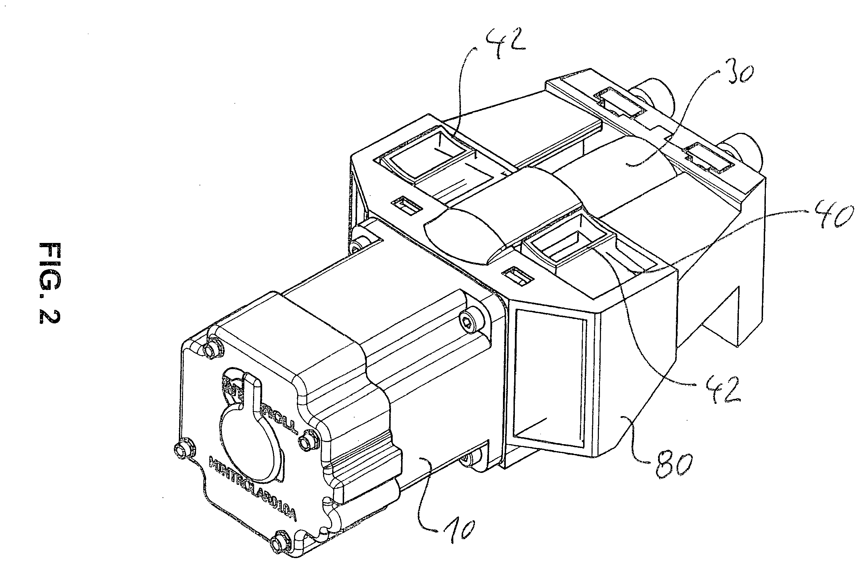

Wie in Fig. 1 und 2 gezeigt ist, hat die Bremsvorrichtung einen Schrittmotor 10 (Steppermotor) oder Servomotor, der durch entsprechende Ansteuerung über eine Niedervoltsteuerung in vorgegebenen Winkelschritten angehalten werden kann. Beispielsweise kann der Schrittmotor in Schritten von 1,8 Grad, d.h. in zweihundert Schritten pro Umdrehung, exakt angehalten werden. Der Schrittmotor 10 hat ein Abtriebszahnrad 12 zum Antreiben einer Exzenterwelle 20 über ein Antriebszahnrad 22, das fest mit der Exzenterwelle 20 verbunden ist.

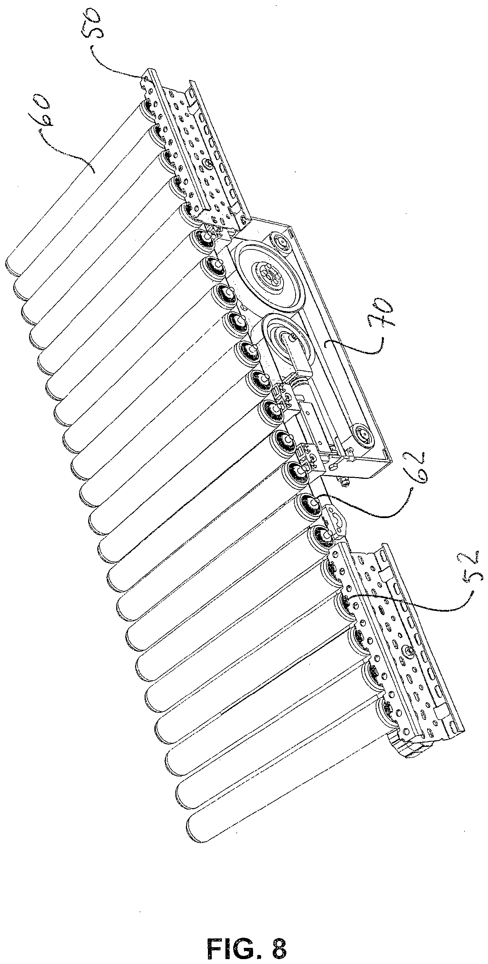

Vorzugsweise sind die Exzenterwelle 20 und der Schrittmotor 10 gemeinsam an einem Rahmen 80 der Bremsvorrichtung montiert. Somit bildet die Bremsvorrichtung eine kompakte Einheit, die an einem Rollenförderer montiert werden kann und bei Bedarf einfach ausgewechselt werden kann. Für Montage/Demontage der Bremsvorrichtung wird diese durch entsprechende (nicht gezeigte) Befestigungsmittel, wie beispielsweise Schrauben, Bolzen, Haken, Schnellverschlüsse und dergleichen an einem Rahmen 50 des (in Figur 8 gezeigten) Rollenförderers eingehängt und/oder befestigt.

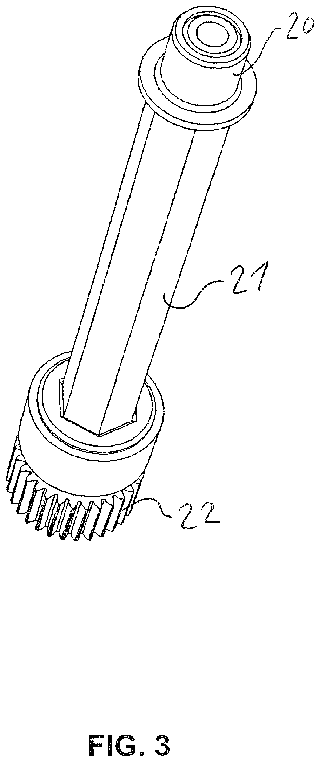

Die Exzenterwelle hat hierzu, wie beispielsweise in Fig. 3 gezeigt ist, einen Grundkörper 21 mit einem Polygonquerschnitt. Als Grundkörper 21 mit Polygonquerschnitt wird beispielsweise eine Sechskantstange verwendet und das Antriebszahnrad 22 hat eine korrespondierende (nicht gezeigte) Sechskantbohrung, um formschlüssig mit dem Grundkörper 21 in Eingriff zu treten. Die Erfindung ist jedoch nicht auf eine Sechskantstange beschränkt, sondern es kann auch jeder andere Polygonquerschnitt für den Grundkörper 21 zur Anwendung gelangen. Beispiele hierfür sind ein Dreiecksquerschnitt, ein Ellipsenquerschnitt, ein Fünfeckquerschnitt, ein Achteckquerschnitt, ein Viereckquerschnitt oder dergleichen. Darüber hinaus kann auch ein Vielzahnquerschnitt verwendet werden.

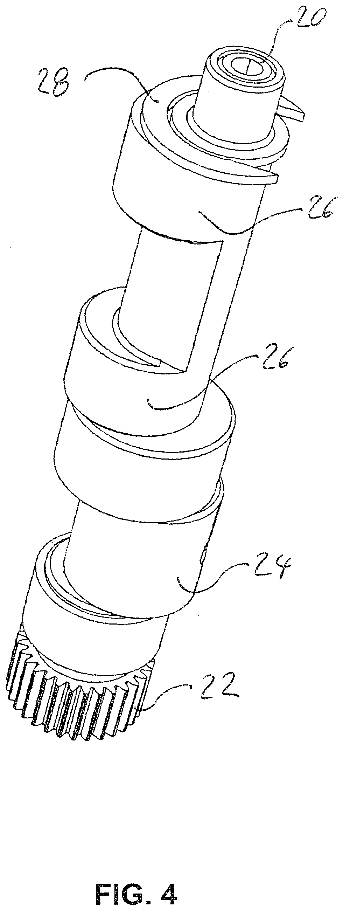

Wie des weiteren in Fig. 4 gezeigt ist, können Exzenter 24, 26 auf dem Grundkörper 21 montiert werden. Diese Exzenter 24, 26 sind vorzugsweise kreisrund, ihre Aufnahmebohrung ist jedoch gegenüber einem Mittelpunkt des Außenumfangs versetzt angeordnet, so daß sich die Exzenter 24, 26 bei der Drehung der Exzenterwelle 20 exzentrisch um deren Mittelpunkt herum drehen.

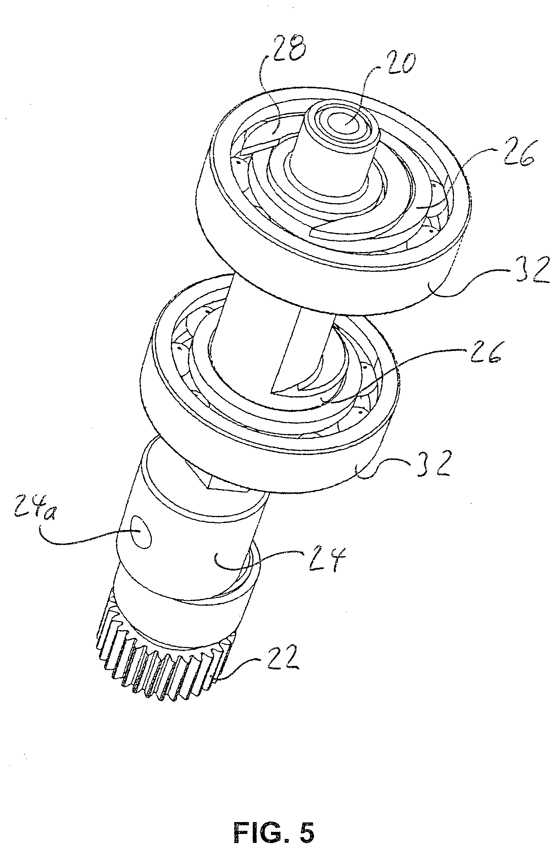

Der erste Exzenter 24 dient dabei der Betätigung eines (in Figur 4 nicht gezeigten) Bremsbelags, der später beschrieben wird. Wie des weiteren in Fig. 5 gezeigt ist, können Wälzlager 32 an dem zweiten Exzenter 26 angebracht werden, um sich ebenfalls exzentrisch um die Exzenterwelle 20 herum zu drehen.

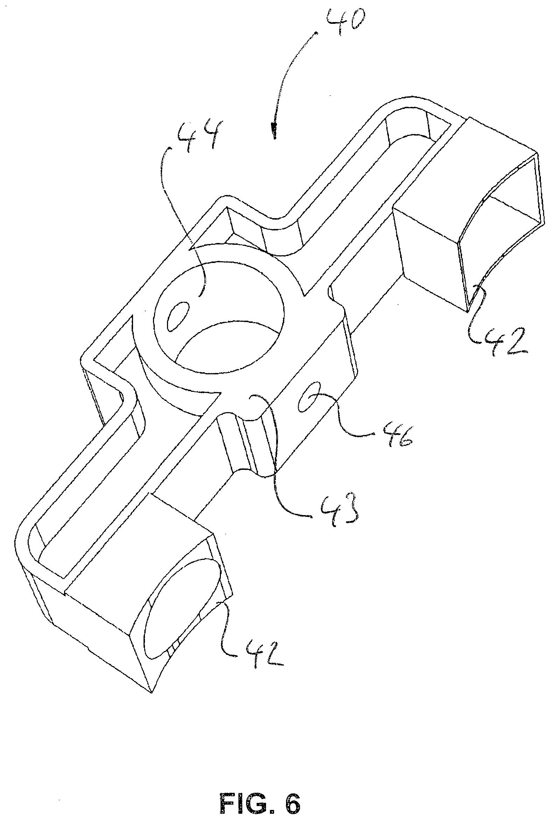

In Fig. 6 ist ein Bremsbelag 40 gezeigt, der ein Paar Bremsflächen 42, 42 aufweist, die über ein Joch bzw. einen Steg 43 miteinander verbunden sind. Die Erfindung ist jedoch nicht auf das Anordnen von zwei Bremsflächen 42, 42 beschränkt. Es können auch eine Bremsfläche oder mehr als zwei Bremsflächen 42, 42 angeordnet werden, je nach Bedarf, wie viele Förderrollen des Rollenförderers durch die Bremsvorrichtung abgebremst werden sollen.

Der Bremsbelag 40 hat des weiteren eine kreisrunde Bohrung 44, in die der erste Exzenter 24 eingesetzt wird. Auf diese Weise wird der Bremsbelag 40 zu der abzubremsenden Förderrolle hin und von dieser weg bewegt, wenn der erste Exzenter 24 durch Drehen der Exzenterwelle 20 bewegt wird. Somit sind keine Mittel für die Kraftübertragung des antreibenden Exzenters 24 auf den Bremsbelag 40 bzw. die Bremsflächen 42, 42 erforderlich, insbesondere sind auch keine Rückstellmittel, wie Federn oder dergleichen erforderlich. Das Ausrichten und Montieren von Hebeln, Federn und die Montage einer aus vielen Einzelteilen bestehenden Bremsvorrichtung kann somit entfallen.

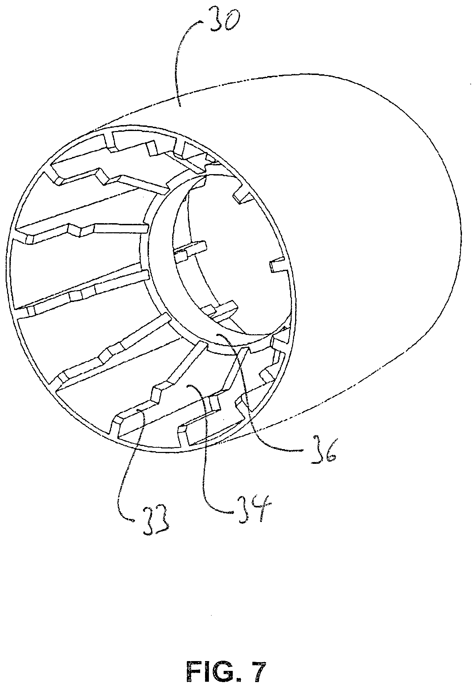

Des weiteren ist eine drehbare Rolle 30, wie diese in Fig. 7 gezeigt ist, an den Wälzlagern 32, 32 angebracht, indem ein äußerer Laufring des Wälzlagers 32 in einen Lagersitz 33 der drehbaren Rolle 30 eingesetzt ist. Vorzugsweise hat der Lagersitz 33 eine Preßpassung zum Einpressen des äußeren Laufrings des Wälzlagers 32 oder eine Übergangspassung. Der Lagersitz 33 wird durch eine Vielzahl von Rippen 34 gebildet, die sich axial innerhalb der drehbaren Rolle 30 erstrecken. Zum Verstärken der Rippen 34 ist vorzugsweise in zentraler Lage in axialer Richtung der drehbaren Rolle 30 zumindest ein Verbindungssteg 36 angeordnet. Auf der axial entgegengesetzten Seite der drehbaren Rolle 30 ist ebenfalls ein entsprechender Lagersitz 33 angeordnet, so daß die drehbare Rolle 30 über ein Paar Wälzlager 32, 32 auf dem Paar zweiter Exzenter 26, 26 gelagert wird.

Wie insbesondere in Fig. 4 gezeigt ist, ist der erste Exzenter 24 in Umfangsrichtung der Exzenterwelle 20 gegenüber den zweiten Exzentern 26, 26 versetzt angeordnet, vorzugsweise um etwa 180 Grad. Auf diese Weise wird entweder der Bremsbelag 40 oder die drehbare Rolle 30 in Richtung zu den Förderrollen des Rollenförderers bewegt.

In der in Fig. 1 gezeigten Stellung der Exzenterwelle 20 ist der Bremsbelag 40 zu den Förderrollen des (nicht gezeigten) Rollenförderers hin bewegt, um die (nicht gezeigten) Förderrollen abzubremsen, indem der erste Exzenter 24 in Richtung zu den Förderrollen bewegt ist. In dieser Stellung sind die zweiten Exzenter 26, 26 von den Förderrollen weg bewegt, um die drehbare Rolle 30 von den Förderrollen weg zu bewegen. Umgekehrt wird durch Drehen der Exzenterwelle 20 um etwa 180 Grad der erste Exzenter 24 von den Förderrollen weg bewegt, um den Bremsbelag 40 außer Eingriff mit den Förderrollen zu bringen. Dabei werden die zweiten Exzenter 26, 26 in Richtung zu den Förderrollen bewegt, um die drehbare Rolle 30 gegen einen (nicht gezeigten) Antriebsriemen der Förderrollen zu bewegen. Auf diese Weise wird in der zweiten (nicht gezeigten) Stellung der Bremsvorrichtung die drehbare Rolle 30 gegen einen (nicht gezeigten) Antriebsriemen der Förderrollen gedrückt, um einen Reibschluß des Antriebsriemens an den Förderrollen zu gewährleisten.

Gemäß einer vorteilhaften Ausgestaltung der Bremsvorrichtung kommt der Bremsbelag 40 bereits vor Erreichen eines oberen Totpunkts des ersten Exzenters 24, d.h. vor Erreichen des von dem Mittelpunkt der Exzenterwelle 20 entferntesten Punkts des Exzenters 24 in Anlage an die abzubremsende Förderrolle. Wenn der Bremsbelag 40 aufgrund Verschleißes dünner wird, dreht der Schrittmotor 10 den Exzenter 24 entsprechend weiter, so dass eine automatische Nachstellung des Bremsbelags 40 gewährleistet ist. Zusätzliche Einstell- oder Nachstellmittel, wie Hebel, Federn, Seilzüge etc. können dadurch entfallen.

Weiter bevorzugt erfolgt das entsprechend der Dicke des Bremsbelags 40 weitere Drehen des Exzenters 24 durch eine Strom- bzw. Drehmomentsteuerung des Schrittmotors 10. Der Schrittmotor 10 wird zum Abbremsen und Anlegen des Bremsbelags 40 nicht um einen vorgegebenen Winkelbetrag gedreht, sondern es wird ein Ansteigen des Drehmoments beim Anlegen des Bremsbelags 40 an die Bremsfläche der Förderrolle durch ein Ansteigen des Stroms des Schrittmotors 10 von einer Steuerung des Schrittmotors 10 erfasst.

Nach Erfassen eines Anstiegs des Stroms über einen vorgegebenen oder vorgebbaren Schwellwert wird eine vorgegebene oder vorgebbare Zeitdauer abgewartet und nach Ablauf dieser Zeitdauer die Stromzufuhr im wesentlichen abgeschaltet oder auf einen geringeren Stromwert eingestellt. Somit erfolgt eine Nachstellung des Bremsbelags über die Stromsteuerung des Schrittmotors und erfordert keine weiteren mechanischen Bauteile.

Die Zeitdauer der hohen Stromzufuhr wird durch ein Zeitglied der Steuerung vorgegeben oder ist einstellbar. Dabei beträgt die Zeitdauer beispielsweise etwa 500 mSek. Es können jedoch auch andere Zeiten vorgegeben oder einstellbar sein, wie etwa 100 bis 300 mSek. oder 1 bis 2 Sekunden.

Weiter bevorzugt ist die Steuerung in der Bremsvorrichtung bzw. dem Schrittmotor integriert bzw. angeordnet, so dass die Bremsvorrichtung von außen (extern) lediglich ein Signal zum Bremsen erhält. Das Abschalten oder Begrenzen der Stromzufuhr wird von der internen Steuerung ausgeführt. Beispielsweise ist eine (nicht gezeigte) Platine bzw. eine Schaltkreistafel bzw. ein PCB (printed circuit board) innerhalb der Bremsvorrichtung oder in oder an dem Schrittmotor 10 angeordnet, die die Steuerung aufweist.

Der Rollenförderer mit der Vielzahl von Förderrollen 60 ist in Fig. 8 gezeigt. Die Förderrollen 60 sind dabei in einem Rahmen 50 montiert, indem Fortsätze 62 der Förderrollen 60 in entsprechende Nuten 52 des Rahmens 50 eingehängt sind. Dabei liegen axiale Endabschnitte der Förderrollen 60 auf einem Flachriemen 70 auf, so daß durch den Reibeingriff zwischen dem Endabschnitt der Förderrollen 60 und dem Flachriemen 70 die Förderrollen 60 über den Flachriemen 70 angetrieben werden.

Die Bremsvorrichtung ist unterhalb der Förderrollen 60 an dem Rollenförderer montiert. Nachdem die Förderrollen 60 durch bloßes Einsetzen der Fortsätze 62 in die Nuten 52 des Rahmens 50 an dem Rahmen 50 montiert sind, können die Förderrollen 60 durch den Bremseingriff der (in Fig. 8 nicht gezeigten) Bremsvorrichtung leicht angehoben werden, um von dem Flachriemen 70 weg bewegt und dabei durch den Bremseingriff mit dem Bremsbelag 40 angehalten zu werden. Wenn andererseits die abgebremste Förderrolle 60 wieder angetrieben werden soll, wird durch entsprechendes Umsteuern des Schrittmotors 10 der Exzenter 24 mit dem Bremsbelag 40 von der Förderrolle 60 weg bewegt und das Paar zweiter Exzenter 26 wird mit der drehbaren Rolle 30 in Richtung zu den Förderrollen 60 bewegt, um den Flachriemen 70 gegen die vorher abgebremste Förderrolle 60 zu drücken. Auf diese Weise wird die Förderrolle 60 wieder durch den Flachriemen 70 angetrieben.

Die Förderrollen 60 können jedoch auch anders als durch Einhängen in dem Rahmen 50 montiert sein, beispielsweise durch Gleit- oder Wälzlager. In diesem Fall kann ein Anheben der Förderrollen 60 entfallen.

Der Bremsbelag 40 wird aus einem Stück mit den daran angeordneten Bremsflächen 42, 42 hergestellt bzw. gegossen.

Die Wälzlager 32, 32 können handelsübliche Kugellager sein. Es können jedoch auch andere Drehlager eingesetzt werden, wie beispielsweise Nadellager oder Gleitlager oder dergleichen. Die Bauteile erster Exzenter 24, zweiter Exzenter 26 und das Antriebszahnrad 22 werden beispielsweise durch einen in eine Nut der Exzenterwelle 20 eingesetzten Sicherungsring 28 auf der Exzenterwelle 20 in axialer Richtung gesichert. Die drehbare Rolle 30 wird vorzugsweise aus einem Kunststoff gegossen, beispielsweise durch Spritzgießen aus EPDM, POM, ABS-Kunststoff oder dergleichen.

Die Exzenterwelle 20 wird vorzugsweise in einem Rahmen 80 drehbar gelagert, der an den Schrittmotor 10 angeflanscht wird. Vorzugsweise hat die Bohrung 44 des Bremsbelags 40 zumindest eine Schmierbohrung 46 zum Abschmieren oder Ölen der Bohrung 44.

Der erste Exzenter 24 hat ebenfalls vorzugsweise eine Schmierbohrung 24a für die Aufnahme von Schmiermittel.

Obwohl in dem Ausführungsbeispiel der Bremsbelag über den ersten Exzenter 24 betätigt wird, ist die Erfindung nicht darauf beschränkt. Anstelle der Exzenter 24, 26 kann auch eine andere Bauart eines Getriebes eingesetzt werden, das eine Winkeldrehung des Schrittmotors 10 in eine translatorische Bewegung des Bremsbelags 40 und/oder der drehbaren Rolle 30 umwandeln kann. Beispiele hierfür sind Hebelanordnungen, Kulissensteuerungen, Nockenwellen mit Kipphebeln und/oder Stößeln oder dergleichen.

### Bezugszeichenliste

- 10: Schrittmotor
- 12: Abtriebszahnrad
- 20: Exzenterwelle
- 21: Grundkörper
- 22: Antriebszahnrad
- 24: erster Exzenter
- 24a: Schmierbohrung
- 26: zweiter Exzenter
- 28: Sicherungsring
- 30: drehbare Rolle
- 32: Wälzlager
- 33: Lagersitz
- 34: Rippe
- 36: Verbindungssteg
- 40: Bremsbelag
- 42: Bremsfläche
- 43: Joch bzw. Steg
- 44: Bohrung
- 46: Schmierbohrung
- 50: Rahmen
- 52: Nut
- 60: Förderrolle
- 62: Fortzsatz
- 70: Flachriemen
- 80: Rahmen

## Patentansprüche

1. Bremsvorrichtung für einen Rollenförderer mit:
zumindest einem Bremsbelag (40) zum in Eingriff treten mit einem Aussenumfang zumindest einer Förderrolle (60) des Rollenförderers;
einer Exzenterwelle (20) mit einem ersten Exzenter (24) zum Bewegen des Bremsbelags (40) zu der Förderrolle (60) hin und von dieser weg;
**dadurch gekennzeichnet, dass**
ein Schrittmotor (10) zum Drehen der Exzenterwelle (20) vorgesehen ist; und
der Bremsbelag (40) aus einem Stück mit daran angeordneten Bremsflächen (42) hergestellt bzw. gegossen ist und eine Bohrung (44) für die drehbare Aufnahme des ersten Exzenters (24) aufweist.

2. Bremsvorrichtung nach Anspruch 1, wobei ein Abtriebszahnrad (12) des Schrittmotors (10) mit einem an der Exzenterwelle (20) angebrachten Antriebszahnrad (22) in Eingriff steht.

3. Bremsvorrichtung nach einem der vorherigen Ansprüche, wobei die Exzenterwelle (20) mindestens einen zweiten Exzenter (26) aufweist, der gegenüber dem ersten Exzenter (24) versetzt angeordnet ist und als Lagersitz für eine Lagerung einer drehbaren Rolle (30) dient.

4. Bremsvorrichtung nach Anspruch 3, wobei die drehbare Rolle (30) aus einem Kunststoff gegossen ist und/oder ein Paar Wälzlager (32) aufweist.

5. Bremsvorrichtung nach einem der vorherigen Ansprüche, wobei der Bremsbelag (40) ein Paar Reibflächen aufweist, die über ein Joch (43) oder einen Steg miteinander verbunden sind.

6. Bremsvorrichtung nach einem der vorherigen Ansprüche, wobei die Exzenterwelle (20) einen Grundkörper (21) mit einem Polygon-Querschnitt aufweist.

7. Bremsvorrichtung nach einem der vorherigen Ansprüche, wobei der Schrittmotor (10) eine Steuerung aufweist, die die Stromzufuhr abschaltet oder begrenzt, wenn nach dem Überschreiten eines vorgegebenen oder vorgebbaren Stromwerts eine vorgegebene oder vorgebbare Zeit verstrichen ist.

8. Bremsvorrichtung nach einem der vorherigen Ansprüche, wobei die Exzenterwelle (20) und der Schrittmotor (10) gemeinsam an einem Rahmen (80) der Bremsvorrichtung montiert sind.

9. Rollenförderer mit einer Vielzahl von in einem Rahmen (50) angeordneten drehbaren Förderrollen (60), die von einem Flachriemen (70) angetrieben werden, indem die Förderrollen (60) in reibschlüssigem Eingriff mit dem Flachriemen (70) stehen, wobei zumindest eine Bremsvorrichtung nach einem der vorherigen Ansprüche zum Abbremsen zumindest einer Förderrolle (60) an dem Rahmen (50) montiert ist.

10. Verfahren zum Herstellen einer Bremsvorrichtung für einen Rollenförderer mit den Schritten:
Bereitstellen einer Exzenterwelle (20) mit einem Polygon-Querschnitt;
Anordnen zumindest eines ersten Exzenters (24) auf der Exzenterwelle (20) in formschlüssiger Weise, um ein relatives Verdrehen des ersten Exzenters (24) gegenüber der Exzenterwelle (20) zu verhindern;
Herstellen bzw. Gießen eines Bremsbelags (40) aus einem Stück mit daran angeordneten Bremsflächen (42);
in Eingriff bringen zumindest eines Bremsbelags (40) mit dem ersten Exzenter (24) derart, dass der erste Exzenter (24) in einer Bohrung (44) des Bremsbelags (40) drehbar aufgenommen wird; und
Bereitstellen eines Schrittmotors (10) zum Antreiben der Exzenterwelle (20).

## Claims

1. Braking device for a roller conveyor, comprising:
at least one brake pad (40) for engagement with an outer circumference of at least one conveyor roller (60) of the roller conveyor;
an eccentric shaft (20) having a first eccentric (24) for moving the brake pad (40) towards the conveyor roller (60) and away therefrom;
**characterized in that**
a stepping motor (10) for rotating the eccentric shaft (20) is provided; and
the brake pad (40) is produced or molded in one piece with braking surfaces (42) arranged thereon and has a hole (44) for rotatably receiving the first eccentric (24)

2. Braking device according to claim 1, wherein a driven gear (12) of the stepping motor (10) engages with a driving gear (22) mounted to the eccentric shaft (20).

3. Braking device according to one of the preceding claims, wherein the eccentric shaft (20) comprises at least one second eccentric (26) which is arranged offset from the first eccentric (24) and serves as a bearing seat for bearing a rotatable roller (30).

4. Braking device according to one of the preceding claims, wherein the rotatable roller (30) is molded from a plastic material and/or has a pair of roller bearings (32).

5. Braking device according to one of the preceding claims, wherein the brake pad (40) has a pair of friction surfaces, which are connected to each other by means of a yoke (43) or a ridge.

6. Braking device according to one of the preceding claims, wherein the eccentric shaft (20) has a base body (21) with a polygonal cross-section.

7. Braking device according to one of the preceding claims, wherein the stepping motor (10) has a controller, which switches off or limits the power supply, when a predetermined or predeterminable period of time has elapsed after a predetermined or predeterminable current value has been exceeded.

8. Braking device according to one of the preceding claims, wherein both the eccentric shaft (20) and the stepping motor (10) are mounted to a frame (80) of the braking device.

9. Roller conveyor having a plurality of rotatable conveyor rollers (60) which are arranged in a frame (50) and are driven by a flat belt (70) by the conveyor rollers (60) being in frictional engagement with the flat belt (70), wherein at least one braking device according to one of the preceding claims for decelerating at least one conveyor roller (60) is mounted to the frame (50).

10. A method for producing a braking device for a roller conveyor, comprising the steps of:
providing an eccentric shaft (20) with a polygonal cross-section;
arranging at least one first eccentric (24) on the eccentric shaft (20) in a form-locking manner to prevent a relative rotation of the first eccentric (24) relative to the eccentric shaft (20);
producing or molding a brake pad (40) in one piece with braking surfaces (42) arranged thereon;
engaging at least one brake pad (40) with the first eccentric (24) such that the first eccentric (24) is rotatably received in a hole (44) of the brake pad (40); and providing a stepping motor (10) for driving the eccentric shaft (20).

## Revendications

1. Dispositif de freinage pour un transporteur à rouleaux avec :
au moins une garniture de frein (40) pour l'engrenage avec une périphérie externe d'au moins un rouleau de transport (60) du transporteur à rouleaux ;
un arbre excentrique (20) avec un premier excentrique (24) pour le déplacement de la garniture de frein (40) vers le rouleau de transport (60) et à l'écart de celui-ci ;
**caractérisé en ce que**
un moteur pas à pas (10) est prévu pour la rotation de l'arbre excentrique (20) ; et
la garniture de frein (40) est fabriquée ou coulée à partir d'une pièce avec des surfaces de frein disposées sur elle (42) et présente un alésage (44) pour la réception rotative du premier excentrique (24).

2. Dispositif de freinage selon la revendication 1, dans lequel une roue dentée de sortie (12) du moteur pas à pas (10) s'engrène avec une roue dentée d'entraînement (22) fixée sur l'arbre excentrique (20).

3. Dispositif de freinage selon une des revendications précédentes, dans lequel l'arbre excentrique (20) présente au moins un second excentrique (26) qui est disposé de manière décalée par rapport au premier excentrique (24) et sert de siège de logement pour un logement d'un rouleau rotatif (30).

4. Dispositif de freinage selon la revendication 3, dans lequel le rouleau rotatif (30) est coulé à partir d'une matière plastique et/ou présente une paire de paliers à roulement (32).

5. Dispositif de freinage selon une des revendications précédentes, dans lequel la garniture de frein (40) présente une paire de surfaces de friction qui sont connectées ensemble par le biais d'une pièce de couplage (43) ou d'une traverse.

6. Dispositif de freinage selon une des revendications précédentes, dans lequel l'arbre excentrique (20) présente un corps de base (21) avec une section transversale polygonale.

7. Dispositif de freinage selon une des revendications précédentes, dans lequel le moteur pas à pas (10) présente une commande qui déconnecte ou limite l'arrivée de courant lorsqu'une durée prédéfinie ou pouvant être prédéfinie s'est écoulée après le dépassement d'une valeur de courant prédéfinie ou pouvant être prédéfinie.

8. Dispositif de freinage selon une des revendications précédentes, dans lequel l'arbre excentrique (20) et le moteur pas à pas (10) sont montés ensemble sur un cadre (80) du dispositif de freinage.

9. Transporteur à rouleaux avec une pluralité de rouleaux de transport rotatifs (60) disposés dans un cadre (50) qui sont entraînés par une courroie plate (70) en ce que les rouleaux de transport (60) s'engrènent de manière entraînée par friction avec la courroie plate (70), dans lequel au moins un dispositif de freinage selon une des revendications précédentes est monté sur le cadre (50) pour le freinage d'au moins un rouleau de transport (60).

10. Procédé servant à fabriquer un dispositif de freinage pour un transporteur à rouleaux avec les étapes de :
mise à disposition d'un arbre excentrique (20) avec une section transversale polygonale ;
agencement d'au moins un premier excentrique (24) sur l'arbre excentrique (20) par conjugaison de formes pour empêcher une torsion relative du premier excentrique (24) par rapport à l'arbre excentrique (20) ;
fabrication ou coulage d'une garniture de frein (40) à partir d'une pièce avec des surfaces de frein disposées sur elle (42) ;
engrènement d'au moins une garniture de frein (40) avec le premier excentrique (24) de telle sorte que le premier excentrique (24) est reçu à rotation dans un alésage (44) de la garniture de frein (40) ; et
mise à disposition d'un moteur pas à pas (10) pour l'entraînement de l'arbre excentrique (20).
